# EUROPEAN PATENT APPLICATION

(11) **EP 0 957 595 A2**
(43) Date of publication of application: **17.11.1999**
(21) Application number: 99303769.6
(22) Date of filing: 14.05.1999
(51) Int. Cl.: H04B 10/08

(54) **Signal-to-noise ratio monitoring apparatus and method in optical signals**

(30) Priority: 14.05.1998 JP 13193498
(71) Applicant: NEC CORPORATION, Tokyo (JP)
(72) Inventor: Ogata, Takaaki, Tokyo (JP)
(74) Representative: Orchard, Oliver John

(57) **Abstract**

A monitoring method and apparatus for monitoring the ratio between signals and noise in optical signals is described. The apparatus has a resistor connected in series with a light receiving element, and a differential amplifier for outputting the difference between the voltages at the two ends of the resistor, wherein the differential amplifier outputs the sum of the signal light component and the noise light component. An equalizing amplifier which is connected to the light receiving element outputs the signal light component. A divider outputs the ratio between the signal light component and the sum of the signal component and noise light component.

## Description

The present invention relates to a method and apparatus which is suitable for monitoring the signal-to-noise ratio in optical transmission systems.

The method and apparatus to be described below by way of example in illustration of the invention are particularly suitable for checking for any deterioration in the quality of transmission.

Optical transmission systems using optical fibres as transmission media are used in many fields, including trunk communications, submarine communications and subscriber communications systems. Optical transmission systems are provided with such apparatus as optical booster amplifiers, optical preamplifiers and optical repeaters. These apparatus are employed with optical fibre amplifiers that have been developed in recent years. An optical fibre amplifier uses, as an amplifying medium, optical fibres to whose core are added rare earth elements such as Er ions. In an optical repeating/transmission system using such an optical amplifier, it is desirable to monitor constantly the ratio between noise light and signal light emitted from the optical amplifier, i.e. the signal-to-noise ratio. Signal-to-noise ratio measuring apparatus in conventional use include such instruments as optical spectrum analyzers utilizing diffraction gratings. However, such previously proposed instruments are complex in configuration and bulky. Further, because the instruments include moving parts, long term reliability is reduced. It is therefore difficult to incorporate such a previously proposed signal-to-noise ratio monitoring device into a transmission apparatus, for example into an optical repeater, for the purpose of constantly checking the quality of transmission.

Arrangements to be described below, by way of example in illustration of the present invention, are a compact and yet reliable signal-to-noise ratio monitoring apparatus for optical transmission systems using an optical amplifier, an optical receiver employing this apparatus, and a method of monitoring a signal-to-noise ratio.

In a particular signal-to-noise ratio monitoring apparatus to be described below by way of example in illustration of the invention there is an equalizing amplifier for extracting the signal component from optical signals, a detector for detecting an electric signal corresponding to the average of the optical signals and outputting it, and a comparator for outputting the ratio between the output value of this detector and the amplitude of the signal output from the equalizing amplifier.

In another signal-to-noise ratio monitoring apparatus to be described below, by way of example in illustration of the invention, there is an equalizing amplifier and a detector, a differential amplifier for outputting the difference between the output of the detector and the amplitude of the signal output from the equalizing amplifier, and a comparator for outputting the ratio between the output value of the differential amplifier and the amplitude of the signal output from the equalizing amplifier.

An optical receiver to be described below, by way of example in illustration of the invention, has a configuration in which either of the above-described signal-to-noise ratio monitoring apparatus and a light receiving element are combined. The detector may have a configuration which includes a resistor connected in series with the light receiving element and a differential amplifier for outputting the difference between the voltages at the two ends of the resistor. It may be provided with a peak detector for detecting the amplitudes of signals which are output from the equalizing amplifier.

In a particular signal-to-noise ratio monitoring method to be described below, by way of example in illustration of the invention, an average photocurrent value into which optical signals are photoelectrically converted is further converted into a voltage, the signal component in the optical signals being output using an equalizing amplifier, and the ratio between the amplitude of the signal component and the voltage being calculated and output.

In another signal-to-noise ratio monitoring method to be described below, by way of example in illustration of the invention, an average photocurrent value into which optical signals are photoelectrically converted is further converted into a voltage, the signal component in the optical signals being output using an equalizing amplifier, the difference between the amplitude of the signal component and the voltage being calculated, and the ratio between this difference and the amplitude of the signal component being calculated and output.

Such a signal-to-noise ratio monitoring apparatus, which has no moving part and which can be configured compactly, can be installed in an optical repeater or the like for the constant checking of the quality at the transmission point.

The following description and drawings disclose, by means of examples, the invention which is characterised in the appended claims, whose terms determine the extent of the protection conferred hereby:-

In the drawings:-
FIG. 1 is a block schematic diagram of an optical receiver having a particular signal-to-noise ratio monitoring apparatus,
FIG. 2 is a block schematic diagram of an optical receiver having another signal-to-noise ratio monitoring apparatus,
FIG. 3 is a block schematic diagram of an optical transmission arrangement for use in testing,
FIG. 4 is a graph showing the characteristic of a signal-to-noise ratio obtained by a particular illustrative arrangement against a signal-to-noise ratio determined by an optical spectrum analyser, and
FIG. 5 is a graph showing the characteristic of a signal-to-noise ratio obtained by another illustrative arrangement against a signal-to-noise ratio determined by an optical spectrum analyser.

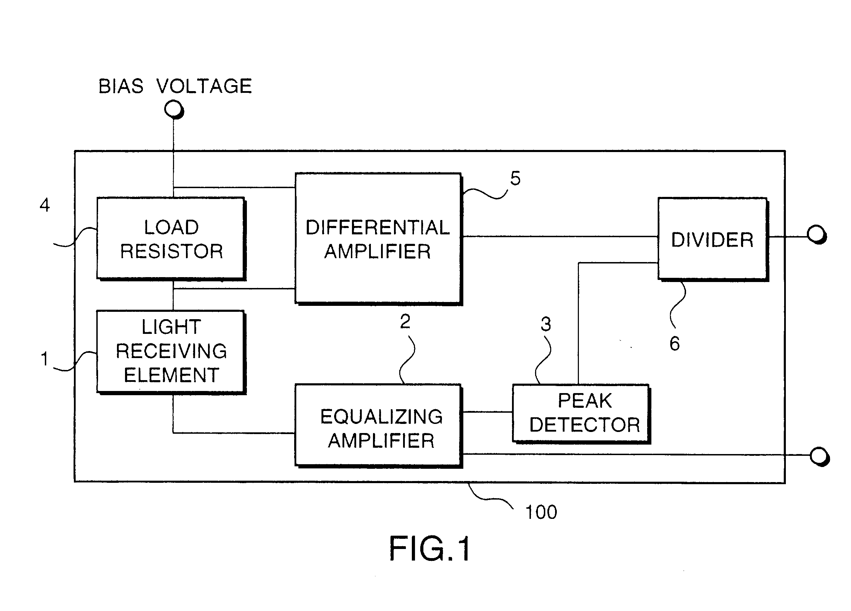

Referring to FIG. 1, in an optical receiver 100 equipped with a signal-to-noise ratio monitoring apparatus to be described, an equalizing amplifier 2 is connected to a light receiving element 1. To the equalizing amplifier 2 there are connected a terminal for outputting received signals and a peak detector 3. To the light receiving element 1 there is connected in series a load resistor 4, to whose two ends a differential amplifier 5 is connected. The outputs of the peak detector 3 and the differential amplifier 5 are input to a divider 6, which outputs a signal-to-noise ratio.

The operation of the optical receiver 100 will be described next. Optical signals that are transmitted contain, besides optical signals as such, optical noise generated in an optical amplifier. The light receiving element 1 photoelectrically converts these transmitted optical signals. The equalizing amplifier 2, whose band is optimized, amplifies the signal component in the output of the light receiving element 1, and outputs equalized received signals. The peak detector 3 detects the signal amplitude of the equalized received signals. This signal amplitude corresponds to the optical signal component of the optical signals received by the light receiving element 1. The load resistor 4 is connected in series with the light receiving element 1, and the differential amplifier 5 detects the voltages at both ends of the load resistor 4. The voltage signal detected by the differential amplifier is proportional to the average photocurrent value of the optical signals received by the light receiving element 1, and is equivalent to the sum of the signal light component and the noise light component. A divider 6 calculates and outputs the ratio between the output of the peak detector 3 and the output voltage of the differential amplifier 5. This output value is the quotient of the division of the signal light component by the sum of the signal light component and the noise light component. Therefore, an optical receiver equipped with such a monitoring apparatus is able to monitor the signal-to-noise ratio, which is an essential factor of the quality of transmission.

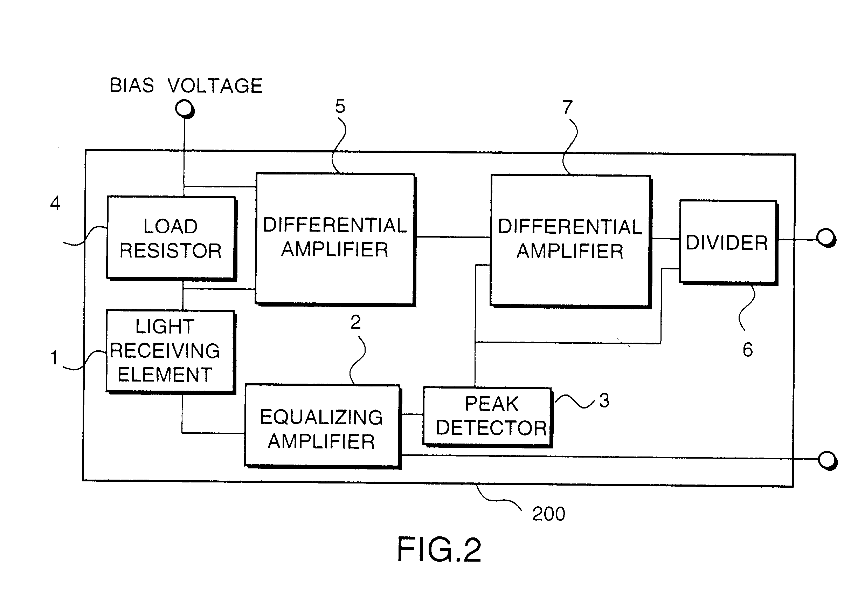

Referring to FIG. 2, an optical receiver 200 having another signal-to-noise ratio monitoring apparatus illustrative of the invention includes the optical receiver 100 of FIG. 1 to which a differential amplifier 7 is further added. The peak detector 3 outputs a signal amplitude to the divider 6 and to the differential amplifier 7. The differential amplifier 5 detects the voltages at both ends of the load resister 4 and outputs the output voltage to the differential amplifier 7. The differential amplifier 7 detects the difference between the output of the peak detector 3 and the output voltage of the differential amplifier 5. The divider 6 calculates and outputs the ratio of the output of the peak detector 3 and the output of the differential amplifier 7. In the optical receiver 200, the output of the peak detector 3 (signal light component) and the output of the differential amplifier 5 (signal light component + noise light component) are input to the differential amplifier 7. As a result, the differential amplifier 7 outputs only the noise light component. Furthermore, the signal light component, which is the output of the peak detector 3, and the noise light component, which is the output of the differential amplifier 7, are input to the divider 6, and the divider 6 outputs the quotient of the division of the signal light component by the noise light component.

In either of the above-described optical receivers, InGaAs · PIN-PD or the like is used as the light receiving element 1, and an amplifier of 2.0 GHz in the reception band and 30dB in gain, as the equalizing amplifier 2. The detection efficiency of the peak detector 3 is 45%. The load resistance of the light receiving element is 100 ohms. The differential amplifier 5 is an operational amplifier. The divider 6 outputs a voltage signal of 10 V when the output ratio is 1.

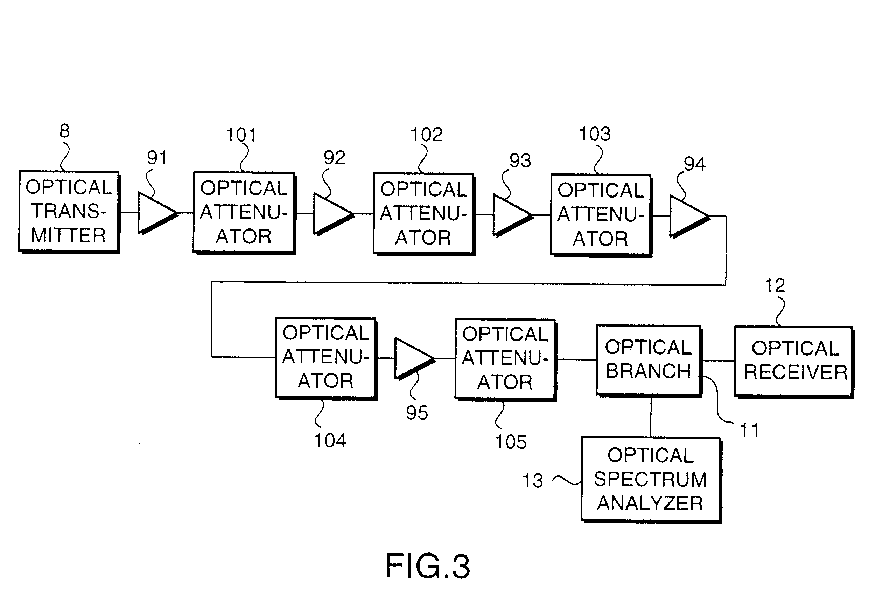

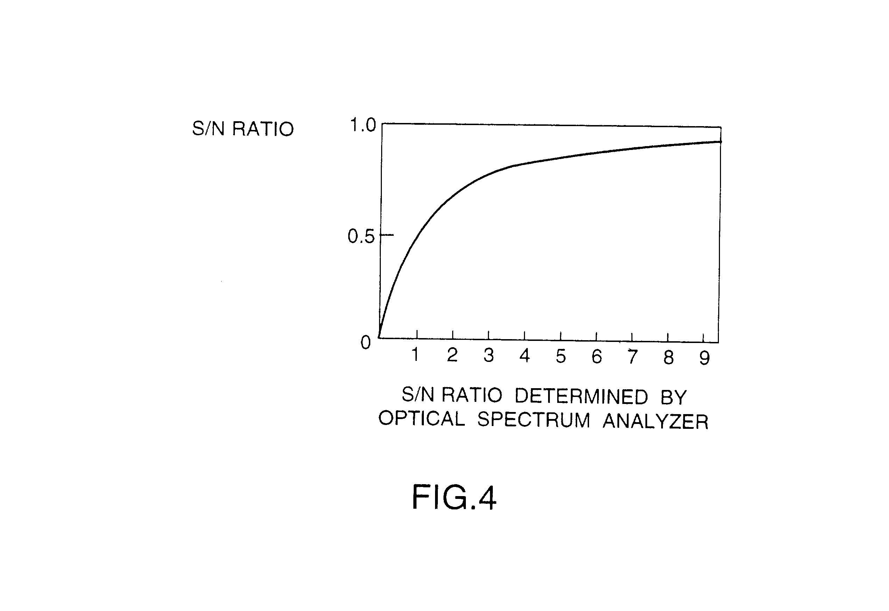

FIG. 3 illustrates an optical transmission system having five optical amplifiers, which are configured for the purpose of verifying a monitoring apparatus. An optical transmitter 8 sends out optical signals of 1555 nm at a transmission rate of 2.5 Gb/s. The five optical amplifiers 91 to 95 are Er-doped fibre amplifiers, of which the noise index is controlled to be 5.0 dB and the output, +6.0 dBm. These optical amplifiers 91 to 95 are arranged alternately with variable optical attenuators 101 to 105. The attenuation by the optical attenuators is 10 dB in the initial state. The output of the variable optical attenuator 105 at the final stage is branched by an optical branch 11, and input into an optical receiver 12 provided with the signal-to-noise ratio monitoring apparatus illustrated in FIG. 1 and an optical spectrum analyzer 13. The signal-to-noise ratio of an optical transmission system can be varied by controlling the power input to an optical amplifier. In this particular system, the signal-to-noise ratio at the optical receiver 12 is measured by adjusting the attenuation by the optical attenuator 102 and thereby varying the power input to the optical amplifier at the third stage. Also, for the sake of comparison, the optical spectrum analyzer 13 measures the ratio between signal light and noise light per nm of band at the same time. The results of these measurements are shown in FIG. 4, wherein the horizontal axis represents the result of the measurement by the optical spectrum analyzer, and the vertical axis that by an apparatus illustrative of the present invention. Since these two measurements manifest an evident correlation, it is confirmed that the apparatus and method described can appropriately monitor the signal-to-noise ratio of optical transmission systems.

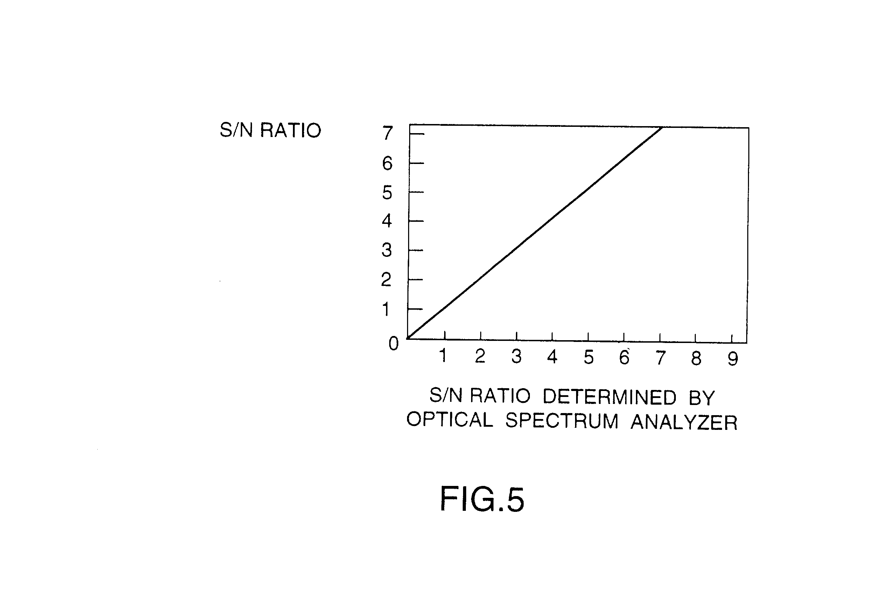

Next, a similar test to that above-described is carried out using an optical receiver 12 equipped with the signal-to-noise ratio monitoring apparatus illustrated in FIG. 2, and the result is shown in FIG. 5. The result reveals that the characteristics monitored by the optical receiver 12 are in a proportional relationship to those monitored by the optical spectrum analyzer 13, and demonstrates that the signal-to-noise ratio can be directly monitored.

As mentioned hitherto, apparatus that have been described in illustration of the present invention are simpler in configuration compared with previously proposed apparatus, and involve no moving part. They can easily, reliably, and constantly determine the signal-to-noise ratio.

While particular arrangements have been described by way of example in illustration of the invention, it will be understood that variations and modifications thereof, as well as other arrangements, may be conceived within the scope of the appended claims.

## Claims

1. A signal-to-noise ratio monitoring apparatus for monitoring the ratio between signals and noise in optical signals, including an equalizing amplifier for extracting the signal component from optical signals, a detector for detecting an electric signal corresponding to the average of the optical signals and outputting it, and a comparator for outputting the ratio between the output value of the detector and the amplitude of the signal which is output from the equalizing amplifier.

2. A signal-to-noise ratio monitoring apparatus as claimed in claim 1 wherein the detector includes a resistor through which an average photocurrent, resulting from photoelectric conversion of optical signals, flows, and a differential amplifier for outputting the difference between the voltages at the two ends of the resistor.

3. A signal-to-noise ratio monitoring apparatus as claimed in claim 1, including a peak detector for detecting the amplitudes of signals which are output from the equalizing amplifier.

4. A signal-to-noise ratio monitoring apparatus for monitoring the ratio between signals and noise in optical signals, including an equalizing amplifier for extracting the signal component from the optical signals, a detector for detecting an electric signal corresponding to the average of the optical signals and outputting it, a differential amplifier for outputting the difference between the output of the detector and the amplitude of the signal which is output from the equalizing amplifier, and a comparator for outputting the ratio between the output value of the differential amplifier and the amplitude of the signal which is output from the equalizing amplifier.

5. A signal-to-noise ratio monitoring apparatus as claimed in claim 4, wherein the detector includes a resistor in which an average photocurrent, resulting from photoelectric conversion of optical signals, flows, and a differential amplifier for outputting the difference between the voltages at the two ends of the resistor.

6. A signal-to-noise ratio monitoring apparatus as claimed in claim 4, including a peak detector for detecting the amplitudes of signals which are output from the equalizing amplifier.

7. An optical receiver for receiving optical signals including a light receiving element, a detector for detecting an electric signal corresponding to the average of the optical signals and outputting it, an equalizing amplifier for extracting the signal component from the optical signals, and a comparator for outputting the ratio between the output value of the detector and the amplitude of the signal which is output from the equalizing amplifier.

8. An optical receiver as claimed in claim 7, wherein the detector includes a resistor connected in series with the light receiving element, a differential amplifier for outputting the difference between the voltages at the two ends of the resistor, and a peak detector for detecting the amplitudes of signals which are output from the equalizing amplifier.

9. An optical receiver for receiving optical signals including a light receiving element, an equalizing amplifier for extracting the signal component from optical signals, a detector for detecting an electric signal corresponding to the average of the optical signals and outputting it, a differential amplifier for outputting the difference between the detector and the amplitude of the signal which is output from the equalizing amplifier, and a comparator for outputting the ratio between the output value of the differential amplifier and the amplitude of the signal which is output from the equalizing amplifier.

10. A signal-to-noise ratio monitoring apparatus as claimed in claim 9, wherein the detector includes a resistor connected in series with the light receiving element, a differential amplifier for outputting the difference between the voltages at the two ends of the resistor, and a peak detector for detecting the amplitudes of signals which are output from the equalizing amplifier.

11. A method for use in monitoring the ratio between signals and noise in optical signals wherein an average photocurrent value resulting from the photoelectric conversion of optical signals is further converted into a voltage, the signal component in the optical signals is output using an equalizing amplifier, and the ratio between the amplitude of the signal component and the voltage is calculated and output.

12. A method for use in monitoring the ratio between signals and noise in optical signals wherein an average photocurrent value resulting from the photoelectric conversion of optical signals is further converted into a voltage, the signal component in the optical signals is output using an equalizing amplifier, the difference between the amplitude of the signal component and the voltage is calculated, and the ratio between this difference and the amplitude of the signal component is calculated and output.
